# EUROPEAN PATENT APPLICATION

(11) **EP 4 752 993 A1**
(43) Date of publication of application: **03.06.2026**
(21) Application number: 25218799.2
(22) Date of filing: 26.11.2025
(51) Int. Cl.: H01M 8/0444, H01M 8/04746, H01M 8/04791, H01M 8/18

(54) **SAFETY SYSTEMS AND METHODS FOR FLOW BATTERIES**

(30) Priority: 27.11.2024 US 202463725720 P
(71) Applicant: Quino Energy, Inc., San Leandro, CA 94577 (US)
(72) Inventor: BAHARI, Meisam, Menlo Park, CA 94025 (US); MURALI, Advaith, Menlo Park, CA 94025 (US); VALLEM, Veenasri, Menlo Park, CA 94025 (US); HAMEDI, Amir Sina, Menlo Park, CA 94025 (US); SPEARS, Sara N., Menlo Park, CA 94025 (US); BEH, Eugene S., Menlo Park, CA 94025 (US)
(74) Representative: D Young & Co LLP

(57) **Abstract**

The safety of redox flow batteries systems employing CN-liganded electrolytes concerns preventing the production of poisonous HCN during operation. Systems are disclosed herein for the detection of parameters under which HCN may be produced when the redox flow batteries are operated under fault conditions, performing corrective actions to ensure HCN is not formed, and further returning the redox flow battery to a normal operating state. Methods employing the systems are also disclosed herein.

## Description

### STATEMENT REGARDING FEDERALLY SPONSORED RESEARCH

This invention was made with government support under grant number DE-EE0009795 from the Advanced Materials and Manufacturing Technologies Office-U.S. Department of Energy. The government has certain rights to the invention.

### TECHNICAL FIELD

This invention relates generally to energy storage. More specifically, the invention relates to systems to detect, prevent, and mitigate safety consequences arising from unintended mixing of redox flow battery reactants, and methods for their use.

### BACKGROUND OF THE INVENTION

A redox flow battery (RFB) takes two liquid or solution-phase chemicals - a negative electrolyte (also called the anolyte or the negolyte) and a positive electrolyte (also called the catholyte or the posolyte) - and reacts them at the negative and positive electrodes respectively of a device called a flow battery stack, which is composed of one or more flow battery cells. These flow battery cells are electrochemical cells. The battery stack extracts electrical energy from the chemical reaction. The spent chemicals are retained in their separate tanks and can be recharged with electricity from sources like solar panels, which makes the chemical reaction go in reverse.

Flow batteries have an advantage over solid-electrode batteries like Li-ion when it comes to longer durations of energy storage. Longer duration batteries can be created by simply using larger tanks of posolyte or negolyte, without spending money on an unnecessarily large flow battery stack.

A critical factor for the commercial success of flow batteries is cost and the avoidance of critical materials in the negolyte or posolyte. The two are frequently linked. For example, the most widely used flow battery chemistry uses vanadium for both the negolyte and posolyte, but vanadium has limited worldwide production and the majority of the world's vanadium is produced in China and Russia, which causes supply chain and geopolitical concerns. In addition, the high and frequently volatile price of vanadium sets a cost floor on vanadium-based flow battery systems that is higher than costs of lithium-ion batteries today. This cost disparity will persist or even widen as lithium-ion batteries continue to fall in cost.

For the reasons above, RFBs with an organic redox-active compound as one of the negolyte or posolyte have been the subject of intense work as they can be produced from abundant and inexpensive materials without needing any critical materials. In some cases, these organic RFBs have both the negolyte and posolyte as organic materials (e.g., a viologen derivative as the negolyte and TEMPO derivative as the posolyte), and in other cases, just one of the negolyte and posolyte is an organic material, such as a quinone derivative as the negolyte and ferrocyanide as the posolyte. A large array of organic negolytes have been studied and reported in the prior art to date, such as quinones, alloxazines, viologens, naphthalenediimides, phenazines, and so on.

In other cases, the negolyte or posolyte, or both, can comprise more than one kind of organic compound. Those mixtures can be different isomers of related compounds, have the same kind of redox-active core with different peripheral functional groups, or be completely different molecules. Similarly, if one or more of the electrolytes comprises a redox-active inorganic species, it can be a salt composed of a redox-active cation and a redox-inactive anion (e.g. in the case of methyl viologen dichloride or 1,1'-bis((3-trimethylammonio)propyl)ferrocene dichloride), it can be a salt composed of a redox-inactive cation and a redox-active anion (e.g. sodium ferrocyanide, potassium ferrocyanide, ammonium ferrocyanide, lithium ferrocyanide, and mixtures thereof), or both the cation and the anion are redox-active. Combinations of more than one redox-active ion and redox-inactive counterion are also possible, such as sodium ferrocyanide and potassium ferrocyanide, methyl viologen dichloride and ethyl viologen dichloride, methyl viologen dichloride and ethyl viologen dibromide, and so on. Finally, for convenience, combinations of the same redox-active compound, whether as a neutral molecule or ion, in two or more different oxidation states, should be regarded as one and the same compound, such as sodium ferrocyanide and potassium ferricyanide. This is reasonable because during regular operation of a RFB, the redox active species are cycled between oxidized and reduced states and should be expected to be found in any proportion of those states.

In a flow battery, the negolyte and posolyte are typically separated from each other by a separator, which can comprise a cation exchange membrane, an anion exchange membrane, a bipolar membrane, a microporous separator, a polymer of intrinsic microporosity. There have also been reported other cases where there is no separator and the RFB instead exploits phase separation between two immiscible liquids, or laminar flow, to minimize mixing or crossover of the negolyte and posolyte materials, which can have undesirable effects like high self-discharge, chemical degradation, loss of capacity due to the negolyte or posolyte no longer being effectively delivered to the negative and positive electrodes respectively, and so on. Crossover or unwanted mixing can arise from diffusion of one chemical species through the separator, through physical damage (e.g., a hole or tear) to the separator, through a leakage path around the separator, or in the case where there is no separator, from non-laminar flow or other turbulent mixing of the negolyte and posolyte fluids.

When the RFB is in a charged state (i.e., has a state of charge (SOC) that is above zero), some portion of the negolyte is in a reduced state and some portion of the posolyte is in an oxidized state. Generally, the higher the SOC of the RFB, the larger the proportion of the negolyte that is in the reduced state and the larger the proportion of the posolyte that is in the oxidized state. To maximize the cell potential and therefore the energy density of the RFB, the negolyte typically has a highly negative reduction potential and the posolyte typically has a highly positive reduction potential, the cell potential being the difference between the negolyte and posolyte reduction potentials. For this reason, the negolyte in its reduced state is a strong reducing agent and the posolyte in its oxidized state is a strong oxidizing agent.

It is well appreciated that organic molecules can be degraded and decomposed by exposure to sufficiently strong oxidizing agents or sufficiently strong reducing agents. Sometimes, the reaction is associated with the release or absorption of protons (or conversely, the absorption or release of hydroxide ions), and in other cases, there is no associated release or absorption of protons (or the converse with respect to hydroxide ions). In those cases where there is absorption or release of protons or hydroxide ions, this is accompanied by a change in the pH of the solution, and the pH change can have additional detrimental effects to the RFB, such as causing the dissolved negolyte or posolyte to precipitate out of solution, or to decompose, or it may accelerate a decomposition reaction that would otherwise be at a sufficiently low rate under normal operating conditions. The pH change may also have unwanted effects such as corrosion, etching, or weakening of the wetted materials in the RFB, which are comprised of the separator, the plumbing, pumps, tanks, and associated sensors and control systems. In other cases, the pH change may cause a previously or normally dissolved chemical species to volatilize and escape the posolyte or negolyte solutions as a vapor or a gas. The chemical species could be normally present in the negolyte or posolyte, or produced as a result of the additional decomposition reactions outlined above. Possible species include carbon dioxide, hydrogen cyanide, hydrogen chloride, hydrogen bromide, and so on.

In one specific case, a RFB with a negolyte comprising an organic redox-active compound and a posolyte comprising ferrocyanide/ferricyanide could experience a crossover event in which a small amount of organic negolyte mixes with an excess of ferricyanide posolyte. The ferricyanide, being an oxidizing agent, can oxidize the organic negolyte in a reaction that causes the release of protons or absorption of protons, thereby lowering the pH of the posolyte fluid. In turn, ferrocyanide and ferricyanide are not stable at low pH, causing some cyanide ligands to dissociate and entering the posolyte solution as free cyanide ions. At sufficiently low pH (hydrogen cyanide or HCN has a pKₐ of 9.2), the cyanide ions are protonated and can escape the solution as free hydrogen cyanide vapor or gas.

Organic RFBs have been in the market for a much shorter time than vanadium RFBs and all the potential side reactions have yet to be appreciated. Detailed systems and methods for detecting, stopping, preventing, mitigating, or reversing the undesirable effects of crossover in an organic RFB have yet to be reported but are essential for safe and reliable operation, for market acceptance, and therefore for overall commercial success.

### SUMMARY OF THE INVENTION

This summary is provided to introduce a selection of concepts in a simplified form that are further described herein. This summary is not intended to identify required or essential features of the claimed subject matter. Nor is this summary intended to be used to limit the scope of the claimed subject matter.

Redox flow battery systems disclosed herein can comprise a redox flow battery apparatus and a hydrogen cyanide or cyanide ion (hereafter referred to as *CN*) detection sensor. The redox flow battery apparatus can comprise a first tank comprising a negolyte solution, a second tank comprising a posolyte solution, and a flow battery stack capable of extracting electrical energy from a chemical reaction of the negolyte and posolyte solutions, and of supplying electrical energy to cause the reverse reaction in the negolyte and posolyte solutions. The flow battery stack can be configured to accept the negolyte solution from the first tank and return negolyte solution back to the first tank, and configured to accept the posolyte solution from the second tank and return posolyte solution back to the second tank.

Methods for maintaining a safe operating condition of the redox flow battery systems are also disclosed herein. In certain aspects, methods can comprise providing a redox flow battery system, processing output data from the CN detection sensor to determine a fault condition of the redox flow battery apparatus, performing a corrective action to resolve the fault condition to a normal operating condition.

### BRIEF DESCRIPTION OF THE FIGURES

The following figures form part of the present specification and is included to further demonstrate certain aspects of the present invention. The invention may be better understood by reference to these figures in combination with the detailed description.

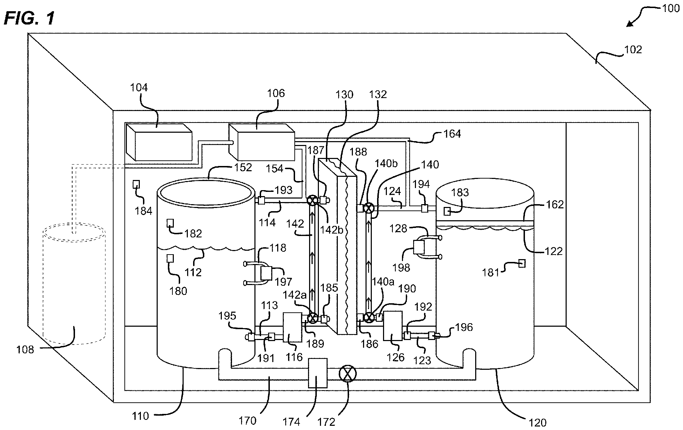

**FIG. 1** presents a schematic diagram of a redox flow battery system.

While the inventions disclosed herein are susceptible to various modifications and alternative forms, only a few specific aspects have been shown by way of example in the drawing and described in detail below. The figures and detailed description of specific aspects are not intended to limit the breadth or scope of the inventive concepts or the appended claims in any manner. Rather, the figures and detailed description are provided to illustrate the inventive concepts to a person of ordinary skill in the art and to enable such person to make and use the inventive concepts.

### DEFINITIONS

To define more clearly the terms used herein, the following definitions are provided. Unless otherwise indicated, the following definitions are applicable to this disclosure. If a term is used in this disclosure but is not specifically defined herein, the definition from the IUPAC Compendium of Chemical Terminology, 2^{nd} Ed (1997), can be applied, as long as that definition does not conflict with any other disclosure or definition applied herein, or render indefinite or non-enabled any claim to which that definition is applied. To the extent that any definition or usage provided by any document incorporated herein by reference conflicts with the definition or usage provided herein, the definition or usage provided herein controls.

Herein, features of the subject matter are described such that, within particular aspects, a combination of different features can be envisioned. For each and every aspect and each and every feature disclosed herein, all combinations that do not detrimentally affect the compounds, compositions, processes, or methods described herein are contemplated with or without explicit description of the particular combination. Additionally, unless explicitly recited otherwise, any aspect or feature disclosed herein can be combined to describe inventive compounds, compositions, processes, or methods consistent with the present disclosure.

While compositions, processes, and methods are described in terms of "comprising" various components or steps, the compositions, processes, and methods also can "consist essentially of" or "consist of" the various components or steps, unless stated otherwise. The terms "a," "an," and "the" are intended to include plural alternatives, e.g., at least one, unless otherwise specified. For instance, as used herein, "a CN detector," "a CN sensor," and "a CN detection sensor" can be used to indicate a single CN detection sensor, or a plurality of sensors used for the detection of CN. In this manner, references to "a CN detector," "a CN sensor," and "a CN detection sensor" are not limited to single sensors configured for the direct detection of CN, but also may refer to a plurality of sensors that operate together to detect a condition that may result in the generation or presence of CN within the RFB system.

It will be understood that a CN detection sensor may be used generally to indicate any sensor used to indicate the presence, or potential generation of CN. Thus, a pH sensor positioned within the electrolyte tank may be considered a CN detection sensor, where it is configured to detect a change in pH that may lead to the generation of CN, even where no CN is present. It will further be understood that references to CN are meant generally to encompass both HCN gas and its anionic form when dissolved within an electrolyte solution (⁻CN).

Because stacks within an RFB may be operated as both a galvanic cell during flow battery discharge and as an electrolytic cell during flow battery charging, for the sake of clarity, the terms *anode*, *cathode*, *anolyte*, or *catholyte* will not be used in the rest of this document. This is because the same electrode can be called an anode or cathode depending on whether the cell is being charged or discharged. The terms *negative electrode*, *positive electrode*, *negolyte*, or *posolyte* will be used instead. Electrolyte will refer to the negolyte and posolyte, collectively.

Various numerical values are disclosed herein. When a series of values are disclosed, the intent is to disclose or claim individually each possible range that such values could reasonably delimit as end points of a particular range as well as any sub-ranges and combinations of sub-ranges encompassed therein, unless otherwise specified. For example, the disclosure that a CN detection threshold can be >5 ppm, >6 ppm, >8 ppm, >10 ppm, >4 ppm, >3 ppm, >2 ppm, >1 ppm, and so on, will be understood as disclosing that the CN detection threshold can be within a range from 1ppm to 10 ppm, from 2 ppm to 8 ppm, and the like. As another example, a disclosure that a CN detection threshold can be a posolyte or negolyte pH below of pH <9.2, pH <9.5 pH <10.0, pH <10.5, pH <11.0, pH <11.5, pH <12.0, will also be understood as a disclosure that the CN detection threshold can be within a range of the posolyte or negolyte pH from 9.2 to 12.0, from 10.5 to 12.0, and the like.

In general, an amount, size, formulation, parameter, range, or other quantity or characteristic is "about" or "approximate" whether or not expressly stated to be such. Whether or not modified by the term "about" or "approximately," the claims include equivalents to the quantities or characteristics.

Although any methods, devices, and materials similar or equivalent to those described herein can be used in the practice or testing of the invention, the typical methods, devices, and materials are herein described.

All publications and patents mentioned herein are incorporated herein by reference in their entirety for the purpose of describing and disclosing, for example, the constructs and methodologies that are described in the publications and patents, which might be used in connection with the presently described invention.

### DESCRIPTION OF THE INVENTION

Disclosed herein are redox flow battery system systems comprising a redox flow battery and components for the detection of CN to ensure a safe operating condition of the redox flow battery, even in a damaged state. Methods for operating the redox flow battery systems and maintaining a safe condition are also disclosed herein.

### SYSTEMS

The invention provides a redox flow battery system comprising a redox flow battery. The redox flow battery is not limited to a particular chemistry, and generally can employ a variety of chemistries for the negolyte and posolyte, as long as at least one of the negolyte and posolyte comprises an organic redox-active material. Suitable combinations include a quinone paired with another quinone, a quinone paired with ferrocyanide/ferricyanide (Fe(CN)), an alloxazine paired with Fe(CN), a phenazine paired with Fe(CN), a viologen derivative paired with a ferrocene derivative, a viologen derivative paired with a TEMPO derivative, a naphthalenediimide derivative paired with a ferrocene derivative, a naphthalenediimide derivative paired with a TEMPO derivative, and many other examples in the prior art.

One or both of the negolyte and posolyte solutions can also comprise one or more supporting electrolytes, which are typically added to ensure that the solutions are at the correct pH and to improve the electrical conductivity of the negolyte and posolyte solutions. Examples of supporting electrolytes can include strong acids such as sulfuric acid or hydrochloric acid, strong bases such as sodium hydroxide or potassium hydroxide, neutral salts such as sodium sulfate or potassium chloride, or pH buffers such as potassium dihydrogen phosphate, dipotassium hydrogen phosphate, sodium bicarbonate, and so on. The negolyte and posolyte solutions may also include additives to improve the solubility of the active materials in the solutions. The solvent of the negolyte and posolyte solutions can be water.

The amount, volume, or charge capacity of the negolyte and posolyte solutions do not have to be equal or substantially equal to each other. They can be any arbitrary amount. In some embodiments, it is advantageous to supply an excess of either the negolyte or the posolyte in the redox flow battery.

In certain aspects, the redox flow battery can also comprise a single electrochemical cell or, alternatively, more than one cell. In aspects with a plurality of electrochemical cells, the cells can be the same or different sizes. In other aspects, the cells may be arranged, in series or parallel, to form an electrochemical stack; such stacks can themselves be arranged in arrays to be connected in series or parallel, electrically, or hydraulically, with the electrical and hydraulic connections being independent of each other. Hereafter, use of the terms "cell" or "stack" should also be understood to be interchangeable, i.e., one or more cells, which themselves comprise one or more stacks, when referring to this or any other electrochemical system.

In addition to the cells or stacks, and the negolyte and posolyte solutions, the redox flow battery also comprises additional components required for the normal functioning of the redox flow battery system, including tanks (separate or divided) for the negolyte and posolyte solutions, pumps to circulate the negolyte and posolyte, tubes and plumbing to connect the tanks to the cells and stacks and back, and any number of associated control systems, sensors, and power electronics required for regular operation.

**FIG. 1** shows an example of a redox flow battery system 100 comprising a redox flow battery as described herein. Generally, redox flow battery system 100 contains a redox flow battery and its associated components useful for its safe operation. The redox flow battery system can include an external housing 102 that encloses each or any of the components of the system. As shown, housing 102 encloses the redox flow battery, a control unit 104, an electrochemical treatment unit 106 in fluid communication with chemical additive storage tank 108, along with various sensors, tubing, plumbing, wiring for interconnecting each of the respective components. Control unit 104 is shown mounted to the external housing 102, however, in other aspects the control unit may be positioned on any of the component parts of the redox flow battery system 100, e.g., on the outside of housing 102 accessible to a user, or in a remote location such as a control room. Similarly, the electrochemical treatment unit 106 can be separated from the housing in other aspects, to a more remote location as suitable for a given implementation of the redox flow battery system.

The redox flow battery includes a first tank 110 comprising a negolyte solution 112, e.g., "negolyte tank," and a second tank 120 comprising a posolyte solution 122, e.g., a "posolyte tank." The electrolyte tanks 110, 120 can be the same volume, or they can hold different volumes. They can be any shape, such as cylindrical, rectangular, spherical, conical bottomed, and so on. The respective electrolyte solutions can be flowed to electrochemical cell 130 through corresponding cell input lines 113, 123 running from each of the negolyte tank and posolyte tank to the electrochemical cell, and in contact with a membrane 132 within the electrochemical cell 130. Further detail of the interior components of the electrochemical cell 130 is omitted for clarity of the figure. Various configurations of electrochemical cells appropriate for use in redox flow batteries are contemplated herein as will be readily apparent to those of skill of the art from the context of this disclosure. Once passed through the electrochemical cell 130, electrolyte solutions 112, 122 are returned to respective electrolyte tanks 110, 120 through cell output lines 114, 124.

In the example shown, each input line further contains an inline pump 116, 126 to move the electrolyte solution into the electrochemical cell. Bypass 140 connects posolyte cell input 123 and posolyte cell output 124 through valves 140a,b. When bypass 140 is in use, the flow of the posolyte solution 122 will be directed around from the electrochemical cell 130 and back to the posolyte tank 120, thereby bypassing the electrochemical cell 130. Negolyte tank 110 also includes a bypass 142 configured to receive the flow of negolyte solution 112 from cell input 113 to cell output 114, bypassing the electrochemical cell 130.

Electrolyte tanks 110 and 120 as shown in **FIG. 1** further include a sampling loop 118, 128 configured to flow respective electrolyte solutions 112, 122 from the electrolyte tanks through detectors 197, 198. Though not a required component of RFB systems disclosed herein, the negolyte tank 110 and posolyte tank 120 of the embodiment shown in **FIG. 1** include a hydraulic connection 170 between the tanks. Hydraulic connection 170 contains a valve 172 and pump 174 for controlling the flow of electrolyte solutions 112, 122 between the respective tanks. In certain aspects, RFB systems can comprise a plurality of hydraulic connections between the negolyte tank 110 and posolyte tank 120, each optionally including a pump and valve to manage the flow therebetween. Alternatively, the hydraulic connection can be positioned to connect to the tanks 110, 120 above the normal levels of the electrolyte solutions 112, 122, such that no valve or pump is required to transfer excess volume from one tank to another.

Posolyte tank 120 further contains an evaporative barrier 162 floating on top of the posolyte solution 122. In certain aspects, the floating evaporative barrier 162 may be connected to a level sensor to obtain a measurement of the fluid level in the tank. While shown only in posolyte tank 120, it will be understood that either or both of the electrolyte tanks 110, 120 can include an evaporative barrier. Similarly, a barrier liner 152 is shown within negolyte tank 110, present to prevent negolyte solution 112 from reacting with the material of the negolyte tank 110. The posolyte tank 120 can contain a similar barrier liner, though not shown.

Electrochemical treatment unit 106 is shown having fluid connections to a storage tank 108 that can store a chemical additive used to treat the electrolyte solutions 112, 122 and correct a fault condition occurring within the redox flow battery system by addition of the chemical additive to the respective electrolyte solutions through treatment feed lines 154, 164. Each of treatment feed lines 154, 164 can intersect at a valved connection with the cell output lines 114, 124 returning electrolyte solutions to their respective electrolyte tanks. In other aspects, treatment feed lines 154, 164 may be operated in loop with the electrochemical treatment unit where an electrolyte solution may be drawn out of the redox flow battery (e.g., by the cell output lines 114, 124) for treatment at the electrochemical treatment unit 106, and thereafter returned to the same or different position within the redox flow battery.

In some embodiments of the invention, when the posolyte comprises Fe(CN), the redox flow battery system comprises specific sensors for detecting free cyanide ions, hydrogen cyanide, conditions conducive for the formation of free cyanide ions or hydrogen cyanide, or conditions associated with the formation of free cyanide ions or hydrogen cyanide; for clarity of communication, these will be henceforth referred to as "*detect(ing) CN*", "*detection of CN*", "*CN detection*", and other similar expressions. Expressions containing the abbreviation "*CN*" are intended to be construed in this fashion.

Sensors can be configured to sample the negolyte fluid (e.g., sensor 180), the posolyte fluid (e.g., sensor 181), the headspace in the tank above the negolyte fluid (e.g., sensor 182), the headspace in the tank above the negolyte fluid (e.g., sensor 183), the immediate exterior of the redox flow battery system (e.g., sensor 184), or combinations thereof. In additional embodiments of the invention, where the sensors for CN detection are configured to sample either the posolyte or negolyte fluids, the fluid just before it enters the flow battery stacks (e.g., sensors 185,186), the fluid just after it exits the flow battery stacks (e.g., sensors 187,188), the fluid just before it exits a pump (e.g., sensor 189,190), the fluid just before it enters a pump (e.g., sensor 191,192), the fluid just before it is circulated back to the electrolyte tank (e.g., sensors 193,194), the fluid just after it leaves the electrolyte tank (e.g., sensors 195, 196), or the sensors can sample the bulk fluid in the electrolyte tanks (e.g., sensors 197,198).

In some embodiments of the invention, for instance when the sensors for CN detection are configured to sample a fluid electrolyte, they may include sensors configured for the direct detection of free cyanide or of hydrogen cyanide, pH sensors, temperature sensors, colorimetric sensors, spectroscopic sensors (infrared, visible light and UV/visible), electrochemical sensors, open circuit voltage cells or sensors, electrical conductivity sensors, hydraulic pressure sensors, liquid level sensors, liquid density sensors, liquid viscosity sensors, and combinations thereof.

In other embodiments of the invention, for instance when the sensors for CN detection are configured to sample the gaseous headspace above a fluid electrolyte or in the immediate exterior of the redox flow battery system, they may include sensors configured for the direct detection of hydrogen cyanide, sensors configured for the direct detection of other gases such as carbon dioxide or sulfur dioxide that are associated with headspaces of acidic fluids, temperature sensors, colorimetric sensors, spectroscopic sensors (infrared, visible light and UV/visible), and electrochemical sensors.

The redox flow battery system can comprise one or more of such CN detection sensors, and in the case where there is a plurality of CN detection sensors, the sensors can be the same type or different types of sensors. The plurality of CN detection sensors can be configured to all sample the same part of the redox flow battery system or the exterior of the redox flow battery system, or different parts of the redox flow battery systems. In some embodiments of the invention, there can be a plurality of identical CN detection sensors all sampling the same part of the redox flow battery system.

The CN detection sensors do not necessarily have to be physically located close to the redox flow battery system; other embodiments of the invention include sensors or other instrumentation for the detection of CN in an *ex situ* fashion, where they are configured to accept samples withdrawn from the electrolyte fluids, the gas in the headspace above the electrolyte fluids, or the gas in the immediate exterior of the redox flow battery system.

In other embodiments of the invention, the rate of formation of free cyanide ions is lowered by strict exclusion of light from the negolyte and posolyte solutions. In these embodiments of the invention, the redox flow battery system, comprises an external housing to shield the tanks, stacks, and plumbing from direct sunlight. In further embodiments of the invention, the flow battery system comprises tanks, stacks, or plumbing made with opaque material of sufficient thickness so as to exclude all light from reaching the negolyte and posolyte solutions. In further embodiments of the invention, the flow battery system comprises tanks, stacks, or plumbing with additional light-absorbing coatings.

In other embodiments of the invention, the redox flow battery system comprises a barrier liner or a coating on the interior of at least one of the negolyte tank, posolyte tank, or the plumbing, which reduces or eliminates side reactions of the fluid solutions with the tank or plumbing material. The barrier liner or coating can comprise polymers such as vinyl ester, polypropylene, poly(tetrafluoroethylene), poly(vinyldifluoride), poly(vinyl chloride), epoxy, phenolic resin, and the like commonly used to impart chemical resistance to tanks and plumbing. The barrier liner or coating can further comprise fillers such as fiberglass, glass flakes, carbon fiber, graphite, silica, alumina, titania, zirconia, and the like commonly used to impart chemical resistance to barriers or coatings.

In other embodiments of the invention, the redox flow battery system comprises an evaporation barrier on the liquid surface in the negolyte or posolyte tanks, which lowers the rate of evaporation of hydrogen cyanide into the tank headspace but can still move with changes to the bulk liquid level. Examples include films, floating covers, and other objects commonly used to lower evaporation from tanks, ponds, or reservoirs normally open to the air.

### METHODS

Methods directed to the above include (a) providing a redox flow battery system comprising one or more of the CN detection sensors, (b) operating the flow battery together with the one or more of the CN detection sensors, (c) reading back from the one or more of the CN detection sensors, and if there has been a positive detection of CN above one or more specific thresholds, thereafter (d) taking one or more corrective actions to mitigate, control, reverse, or halt the production of free cyanide ions or hydrogen cyanide. The one or more corrective actions may be implemented automatically through a control system, or manually upon the intervention of a human operator.

Examples of a CN detection threshold include 4.7 parts per million (ppm), which is the NIOSH recommended airborne exposure limit, or threshold values above and below this number, such as >5 ppm, >6 ppm, >8 ppm, >10 ppm, >4 ppm, >3 ppm, >2 ppm, >1 ppm, >0.5 ppm, >0.2 ppm, >0.1 ppm, >0.05 ppm, 0.02 ppm, and 0.01 ppm. Further examples of a CN detection threshold include a posolyte or negolyte pH below a set value, such as pH <9.2, pH <9.5 pH <10.0, pH <10.5, pH <11.0, pH <11.5, pH <12.0, pH <9.0, pH <8.5, pH <8.0, pH <7.5, pH <7.0, pH <6.5, pH <6.0, pH <5.5, pH <5.0 and so on.

In some embodiments of the invention, there is a plurality of CN detection thresholds, and the corrective actions associated with each individual CN detection threshold may be identical, more frequent, different in extent, or different in nature. The CN detection sensors may be operated intermittently, on a fixed schedule, or continuously, independently of whether the redox flow battery itself is being cycled.

In some embodiments of the invention, the one or more corrective actions comprises adjusting the differential hydraulic pressure of each electrolyte fluid, by means of varying the pump speed or flow rate of each electrolyte, such that the bulk flow rate of negolyte to posolyte, or of posolyte to negolyte, falls below a bulk transfer threshold level. The bulk transfer threshold level can be defined as a function of absolute flow rate, such as <10 mL/min, <5 mL/min, <2 mL/min, <1 mL/min, <0.5 mL/min, <0.2 mL/min, <0.1 mL/min, <0.05 mL/min, <0.02 mL/min, <0.01 mL/min, <0.005 mL/min, <0.002 mL/min, <0.001 mL/min, and so forth, or it can be defined as a percentage of total initial negolyte or posolyte volume, such as 0.01%/day, 0.005%/day, 0.002%/day, 0.001%/day, 0.0005%/day, 0.0002%/day, 0.0001%/day, 0.00005%/day, 0.00002%/day, 0.00001%/day, and so on.

In some embodiments of the invention, the one or more corrective actions may be implemented preemptively without waiting for a positive detection of CN above the one or more specific thresholds. In other embodiments of the invention, the one or more corrective actions may be implemented from the beginning of operation of the redox flow battery system.

In other embodiments of the invention, the one or more corrective actions comprises adjusting the pH of the posolyte fluid, the negolyte fluid, or both. The pH adjustment can be achieved by adding an external solution of acid, base, or buffer solution, from an external source to the posolyte fluid, the negolyte fluid, or both. The external solution can comprise one or more solutes for effecting the pH adjustment, such as sodium hydroxide, potassium hydroxide, a mixture of sodium and potassium hydroxide, a mixture of potassium hydroxide and trisodium phosphate, and many other similar combinations readily apparent to one skilled in the art.

In other embodiments of the invention, the one or more corrective actions comprises adjusting and maintaining the temperature of the posolyte fluid, the negolyte fluid, or both, below or above a threshold level. The temperature adjustment can be effected by many ways apparent to one skilled in the art, including contact of either electrolyte fluid with a heat exchanger supplied with steam or coolant, immersion heaters, jacketed heaters, or chillers, and the like. If heating is desired, the redox flow battery may supply additional heat by charging or discharging the battery at a power higher than the nominal power, such that the heat dissipated in the cells and stacks of the redox flow battery is increased.

In other embodiments of the invention, the one or more corrective actions comprises stopping, slowing, or bypassing the flow of the negolyte solution, posolyte solution, or both the negolyte and posolyte solutions to the redox flow battery cells and stacks. This alteration in flow can be applied to all cells and stacks in the redox flow battery, or a subset of all the cells and stacks in the redox flow battery.

In other embodiments of the invention, the one or more corrective actions comprises removing or replacing all cells and stacks in the flow battery, or a subset of all the cells and stacks in the flow battery, and reconfiguring the plumbing as appropriate to connect new cells and stacks, or to disconnect previously existing cells and stacks.

In other embodiments of the invention, the one or more corrective actions comprises deliberately creating a large enough hydraulic pressure differential between the negolyte and posolyte solutions by means of varying the pump speed or flow rate of each electrolyte, so as to cause widespread membrane failure and rapid mixing of the negolyte and posolyte solutions with each other.

In other embodiments of the invention, the redox flow battery system further comprises a hydraulic connection between the negolyte and posolyte tanks, normally kept closed by a valve, and the one or more corrective actions comprises opening the valve and circulating fluid from the negolyte tank to the posolyte tank and back again so as to rapidly mix the contents of the negolyte and posolyte solutions with each other.

In other embodiments of the invention, the one or more corrective actions comprises oxidative destruction of free cyanide ions or hydrogen cyanide, such that the concentration of those species falls below a threshold level. The oxidative destruction can be effected chemically by adding an external strong oxidizing agent to the negolyte or posolyte solution, such as chlorine gas, ozone, sodium or potassium hypochlorite solution, sodium or potassium chlorite solution, sodium or potassium chlorate solution, sodium or potassium perchlorate solution, potassium permanganate solution, and others apparent to one skilled in the art. The external strong oxidizing agent may be provided through a separate tank or generated electrochemically through an external electrochemical system. Alternatively, the oxidative destruction can be effected electrochemically by oxidizing the negolyte or posolyte solution with the redox flow battery cells and stacks at a suitably high electrical potential, or by providing an external electrochemical system, such as an electrolyzer of the type typically used for the removal of cyanide through electrooxidation, to subject the negolyte or posolyte to electrooxidation. The external electrochemical system may also be capable of performing any optional rebalancing that may be required afterwards.

### EXAMPLES

### PROPHETIC EXAMPLE 1

A redox flow battery system comprising a quinone-based negolyte and a Fe(CN) posolyte suffers from a slow but steady bulk transfer of negolyte into the posolyte solution, due to a hole that develops in the membrane in one of the cells. This manifests as a decrease of negolyte volume (or tank filling level) over time and an increase in posolyte volume. The quinone negolyte which enters the Fe(CN) posolyte is oxidized by the excess of ferricyanide in the posolyte and this process releases protons which lowers the pH of the posolyte. If not mitigated in time, the decreased pH would cause the Fe(CN) posolyte to decompose and release free cyanide ions, and further decreases of pH cause some of the free cyanide ions to be protonated and enter the headspace above the posolyte as hydrogen cyanide gas. Conversely, a bulk transfer of posolyte into the negolyte solution, in which a small amount of Fe(CN) mixes with an excess of negolyte, is not associated with any decrease in pH, decomposition of negolyte, or formation of free cyanide, because ferricyanide is quickly reduced by the excess of quinone negolyte in its reduced state to ferrocyanide, and is no longer available to cause further decomposition. Further decomposition is associated with ferricyanide acting on the oxidized form of the quinone negolyte.

A pH sensor in the posolyte tank detects that the pH of the posolyte has dropped from the starting value of 12.5 to 10.5, and a level sensor in the posolyte tank confirms that the average volume of the posolyte has increased over time. No free cyanide ions or hydrogen cyanide has been detected yet, but the pH drop triggers a control system to lower the flow rate of the negolyte fluid such that the pressure differential between the posolyte and negolyte fluids within the cells of the redox flow battery is greater, or less negative, than before. The net result is that the bulk transfer of negolyte into the posolyte solution is halted or even reversed, thereby halting further decreases in solution pH and preventing the formation of free cyanide ions or of hydrogen cyanide. This is confirmed by the level sensor and the pH sensor. A UV/visible sensor that samples the posolyte fluid detects no further increase in quinone concentration in the posolyte fluid. The new pump rates of the negolyte and posolyte are maintained for all future operation of the redox flow battery.

### PROPHETIC EXAMPLE 2

A redox flow battery system comprising a quinone-based negolyte and a Fe(CN) posolyte is operated with negolyte and posolyte solutions flowing at a rate such that the hydraulic pressure of the posolyte in the cells is maintained at a slightly higher level than the negolyte, with a pressure differential of 0.5 psi. A hole later develops in the membrane of one of the cells, but because of the hydraulic pressure differential, there is a bulk transfer of liquid from the posolyte to the negolyte. No change is detected in the pH of the negolyte or the posolyte, but the tank level sensors confirm that the average volume of the negolyte has started to increase over time and the average volume of the posolyte has started to decrease over time. In response, an internal leak is suspected and the sampling frequency of the negolyte and posolyte pH is increased.

The change in average volume prompts the redox flow battery operator to manually adjust the flow rates of the negolyte and posolyte solutions to minimize the bulk solution transfer rate while still ensuring that the overall net transfer is in the direction of posolyte to negolyte.

### PROPHETIC EXAMPLE 3

A redox flow battery system comprising a quinone-based negolyte and a Fe(CN) posolyte, comprising an external supply of concentrated sodium hydroxide solution suffers from a slow but steady bulk transfer of negolyte into the posolyte solution, due to a hole that develops in the membrane in one of the cells.

A pH sensor in the posolyte tank detects that the pH of the posolyte has dropped from the starting value of 12.0 to 11.5, and a level sensor in the posolyte tank confirms that the average volume of the posolyte has increased over time. No free cyanide ions or hydrogen cyanide has been detected yet, but the pH drop triggers a control system to add the concentrated solution of sodium hydroxide to the posolyte solution to raise the pH back to the starting value of 12.0.

### PROPHETIC EXAMPLE 4

A redox flow battery system comprising a quinone-based negolyte and a Fe(CN) posolyte suffers from a slow but steady bulk transfer of negolyte into the posolyte solution, due to a hole that develops in the membrane in one of the cells.

A pH sensor in the posolyte tank detects that the pH of the posolyte has dropped from the starting value of 12.5 to 12.0, and a level sensor in the posolyte tank confirms that the average volume of the posolyte has increased over time. No free cyanide ions or hydrogen cyanide has been detected yet, but in response, the control system alerts the flow battery operator to a suspected internal leak.

The alert prompts the redox flow battery operator to manually replace the individual stacks in the larger array that are suspected to have the internal leak, whereupon the normal operation of the redox flow battery is resumed.

### PROPHETIC EXAMPLE 5

A redox flow battery system comprising a quinone-based negolyte and a Fe(CN) posolyte comprising an external supply of a mixture of sodium hydroxide and potassium hydroxide in solution suffers from a slow but steady bulk transfer of negolyte into the posolyte solution, due to a hole that develops in the membrane in one of the cells.

A pH sensor in the posolyte tank detects that the pH of the posolyte has dropped from the starting value of 12.5 to 11.5, and a level sensor in the posolyte tank confirms that the average volume of the posolyte has increased over time. No free cyanide ions or hydrogen cyanide has been detected yet, but in response, the control system halts the cycling of the flow battery, halts the negolyte and posolyte pumps, and alerts the flow battery operator to a suspected internal leak.

The alert prompts the redox flow battery operator to manually replace the individual stacks in the larger array that are suspected to have the internal leak, followed by an operator-initiated addition of the mixture of sodium hydroxide and potassium hydroxide in solution from the external supply to the posolyte solution to raise the pH back to the starting value of 12.5, and finally followed by the resumption of normal operation of the redox flow battery.

Unless otherwise indicated, all numbers expressing feature sizes, amounts, volumes, charge capacities, states of charge, and other chemical and physical properties used in the specification and claims are to be understood as being modified in all instances by the term "about." Accordingly, unless indicated to the contrary, the numerical parameters set forth in the foregoing specification and attached claims are approximations that can vary depending on the desired properties sought to be obtained by those skilled in the art utilizing the teachings disclosed herein. The use of numerical ranges by endpoints includes all numbers within that range (e.g. 1 to 5 includes 1, 1.5, 2, 2.75, 3, 3.80, 4, and 5; <10% includes 10%, 9.8%, 5.5%, 2%, 0.01%, and 0%; >90% includes 90%, 90.2%, 94.5%, 98%, 99.99%, and 100%) and any range within that range.

Further aspects of the invention are provided in the following numbered paragraphs:
Aspect 1. A redox flow battery system, comprising:
   a redox flow battery apparatus, comprising:
   a first tank comprising a negolyte solution;
   a second tank comprising a posolyte solution;
   a flow battery stack capable of extracting electrical energy from a chemical reaction of the negolyte and posolyte solutions, and of supplying electrical energy to cause the reverse reaction in the negolyte and posolyte solutions,
   the flow battery stack configured to accept the negolyte solution from the first tank and return negolyte solution back to the first tank, and configured to accept the posolyte solution from the second tank and return posolyte solution back to the second tank; and
   a CN detection sensor.
Aspect 2. The system of Aspect 1, wherein the negolyte solution comprises an organic redox-active material.
Aspect 3. The system of Aspect 1 or Aspect 2, wherein the posolyte solution comprises Fe(CN).
Aspect 4. The system of any one of Aspects 1 to 3, further comprising a control system configured to:
   receive an input from the CN detection sensor; and
   alter an operating parameter of the redox flow battery apparatus based on the input from the CN detection sensor.
Aspect 5. The system of Aspect 4, wherein the operating parameter comprises a flow rate of the negolyte solution.
Aspect 6. The system of Aspect 4 or Aspect 5, wherein the operating parameter further comprises a flow rate of the posolyte solution.
Aspect 7. The system of any one of Aspects 1 to 6, further comprising an electrolyte treatment system configured to deliver a chemical additive to either or both of the negolyte solution, the posolyte solution, or both the negolyte and the posolyte solutions.
Aspect 8. The system of Aspect 7, wherein the chemical additive comprises an alkaline solution, an acidic solution, a buffer salt, a buffer solution, or an oxidizing agent.
Aspect 9. The system of Aspect 8, wherein the oxidizing agent comprises chlorine, ozone, permanganate, hypochlorite, chlorite, chlorate, or perchlorate.
Aspect 10. The system of any one of Aspects 7 to 9, wherein the electrolyte treatment system comprises a storage tank comprising the chemical additive.
Aspect 11. The system of any one of Aspects 7 to 10, wherein the chemical additive is generated or produced by the electrolyte treatment system.
Aspect 12. The system of any one of Aspects 7 to 11, wherein the electrolyte treatment unit is configured to accept the negolyte solution from the first tank or the posolyte solution from the second tank, perform an electrochemical redox reaction on the negolyte or posolyte solution, and return the treated negolyte or posolyte solution to the same tank it came from.
Aspect 13. The system of Aspect 12, wherein the electrochemical redox reaction is an oxidation reaction.
Aspect 14. The system of Aspect 12 or Aspect 13, wherein the electrolyte treatment unit is also capable of performing an electrochemical reduction reaction on the negolyte solution from the first tank or the posolyte solution from the second tank.
Aspect 15. The system of any one of Aspects 1 to 14, further comprising a barrier liner or coating on the interior of the second tank containing the posolyte solution.
Aspect 16. The system of any one of Aspects 1 to 15, further comprising an evaporation barrier on the surface of the posolyte solution in the second tank.
Aspect 17. The system of any one of Aspects 1 to 16, further comprising a hydraulic connection between the first tank and the second tank, with a valve located on the hydraulic connection.
Aspect 18. The system of any one of Aspects 1 to 17, wherein the CN detection sensor comprises a pH sensor positioned in the second tank, a level sensor positioned in the second tank, a UV/Vis detector positioned within a sample loop in fluid connection with the posolyte solution, or any combination thereof.
Aspect 19. The system of any one of Aspects 1 to 18, wherein the CN detection sensor further comprises an HCN sensor positioned in the headspace of the second tank above the posolyte solution.
Aspect 20. The system of aspect 18, wherein the CN detection sensor consists of a pH sensor in the second tank, and a level sensor in the second tank.
Aspect 21. The system of any one of Aspects 1 to 20, wherein the CN detection sensor comprises a sensor configured for the direct detection of free cyanide or of hydrogen cyanide, a pH sensor, a temperature sensor, a colorimetric sensor, a spectroscopic sensors, an electrochemical sensor, an open circuit voltage sensor, an electrical conductivity sensor, a hydraulic pressure sensor, a liquid level sensor, a liquid density sensor, a liquid viscosity sensor, a sensor configured for the direct detection of carbon dioxide, a sensor configured for the direct detection of sulfur dioxide, or any combination thereof.
Aspect 22. A method, comprising:
   providing a redox flow battery system, comprising:
      a redox flow battery apparatus, comprising:
      a first tank comprising a negolyte solution;
      a second tank comprising a posolyte solution;
      a flow battery stack capable of extracting electrical energy from a chemical reaction of the negolyte and posolyte solutions, and of supplying electrical energy to cause the reverse reaction in the negolyte and posolyte solutions,
      the flow battery stack configured to accept the negolyte solution from the first tank and return negolyte solution back to the first tank, and configured to accept the posolyte solution from the second tank and return posolyte solution back to the second tank; and
      a CN detection sensor;
   processing output data from the CN detection sensor to determine a fault condition of the redox flow battery apparatus; and
   performing a corrective action to resolve the fault condition to a normal operating condition.
Aspect 23. The method of Aspect 22, wherein the fault condition is a measurement from the CN detection sensor above or below a threshold value.
Aspect 24. The method of Aspect 22 or Aspect 23, wherein the corrective action is preemptively performed regardless of the data from the CN detection sensor, and the corrective action is subsequently modified once the CN detection sensor reports a measurement above or below a threshold value.
Aspect 25. The method of any one of Aspects 22 to 24, wherein the corrective action serves to mitigate, control, reverse, or halt the production of free cyanide ions or hydrogen cyanide.
Aspect 26. The method of any one of Aspects 22 to 25, wherein the corrective action comprises delivering the chemical additive to the negolyte solution, the posolyte solution or both the negolyte and the posolyte solutions using the electrochemical treatment unit.
Aspect 27. The method of any one of Aspects 22 to 26, wherein the redox flow battery apparatus further comprises an electrochemical treatment unit configured to deliver a chemical additive to the negolyte solution, the posolyte solution, or both of the negolyte solution and the posolyte solutions.
Aspect 28. The method of Aspect 27, wherein the electrochemical treatment unit is additionally configured to generate or produce the chemical additive, and the corrective action comprises delivering the chemical additive to the negolyte solution, the posolyte solution or both the negolyte and the posolyte solutions using the chemical addition system.
Aspect 29. The method of Aspect 27 or Aspect 28, wherein the electrochemical treatment unit comprises a chemical additive storage tank.
Aspect 30. The method of any one of Aspects 27 to 29, wherein the chemical additive is selected from the group consisting of an alkaline solution, an acidic solution, a buffer salt, a buffer solution, and an oxidizing agent.
Aspect 31. The method of any one of Aspects 27 to 30, wherein the chemical additive is an oxidizing agent selected from chlorine, ozone, permanganate, hypochlorite, chlorite, chlorate, and perchlorate.
Aspect 32. The method of any one of Aspects 27 to 31, wherein the electrochemical treatment unit is configured to accept the negolyte solution from the first tank or the posolyte solution from the second tank, perform an electrochemical redox reaction on the negolyte or posolyte solution, and return the treated negolyte or posolyte solution to the same tank it came from.
Aspect 33. The method of any one of Aspects 22 to 32, wherein the corrective action comprises:
   transferring negolyte solution from the first tank or posolyte solution from the second tank to the electrochemical treatment unit; and
   performing an electrochemical redox reaction on the negolyte or posolyte solution, and returning the treated negolyte or posolyte solution to the same tank it came from.
Aspect 34. The method of any one of Aspects 22 to 33, wherein the electrochemical redox reaction is an oxidation reaction.
Aspect 35. The method of any one of Aspects 22 to 34, wherein:
   the CN detector comprises a pH sensor and a level sensor positioned within in the posolyte tank; and
   the fault condition comprises a pH less than a threshold pH and a volume of the posolyte solution above a threshold value.
Aspect 36. The method of Aspect 35, wherein the corrective action comprises creating a positive pressure differential within the flow battery stack in the direction from posolyte to negolyte.
Aspect 37. The method of Aspect 35 or Aspect 36, wherein the corrective action comprises adjusting the flow rates of the negolyte solution, the posolyte solution, or both into the flow battery stack.
Aspect 38. The method of Aspect 37, further comprising adjusting the flow rates to minimize the bulk solution transfer rate.
Aspect 39. The method of any one of Aspects 35 to 38, wherein the corrective action comprises adding a solution of sodium hydroxide to the posolyte solution to return the pH to a starting pH value.
Aspect 40. The method of Aspect 39, wherein the solution of sodium hydroxide is added manually.
Aspect 41. The method of Aspect 39 or Aspect 40, wherein the starting pH value is in a range from 11.5 to 12.5.
Aspect 42. The method of any one of Aspects 35 to 41, wherein the corrective action comprises:
   alerting a flow battery operator of a suspected internal leak within a component of the flow battery stack; and
   manually replacing the component of the flow battery stack suspected to have the internal leak.

The foregoing description has been presented for the purposes of illustration and description. It is not intended to be exhaustive or to limit the embodiments to the precise form disclosed. Many modifications and variations are possible in light of the above teachings. Any or all features of the disclosed embodiments can be applied individually or in any combination and are not meant to be limiting, but purely illustrative. It is intended that the scope of the invention be limited not with this detailed description, but rather, determined by the claims appended hereto.

## Claims

1. A redox flow battery system, comprising:
a redox flow battery apparatus, comprising:
a first tank comprising a negolyte solution;
a second tank comprising a posolyte solution;
a flow battery stack capable of extracting electrical energy from a chemical reaction of the negolyte and posolyte solutions, and of supplying electrical energy to cause the reverse reaction in the negolyte and posolyte solutions,
the flow battery stack configured to accept the negolyte solution from the first tank and return negolyte solution back to the first tank, and configured to accept the posolyte solution from the second tank and return posolyte solution back to the second tank; and
a CN detection sensor.

2. The system of Claim 1, wherein the negolyte solution comprises an organic redox-active material.

3. The system of Claim 1 or Claim 2, wherein the posolyte solution comprises Fe(CN).

4. The system of any one of Claims 1 to 3, further comprising a control system configured to:
receive an input from the CN detection sensor; and
alter an operating parameter of the redox flow battery apparatus based on the input from the CN detection sensor.

5. The system of Claim 4, wherein the operating parameter comprises:
a flow rate of the negolyte solution; and
a flow rate of the posolyte solution.

6. The system of any one of Claims 1 to 5, further comprising an electrolyte treatment system configured to deliver a chemical additive to either or both of the negolyte solution, the posolyte solution, or both the negolyte and the posolyte solutions.

7. The system of Claim 6, wherein the chemical additive comprises an alkaline solution, an acidic solution, a buffer salt, a buffer solution, an oxidizing agent selected from chlorine, ozone, permanganate, hypochlorite, chlorite, chlorate, or perchlorate, or combinations thereof.

8. The system of Claim 6 or Claim 7, wherein the chemical additive is generated or produced by the electrolyte treatment system.

9. The system of any one of Claims 6 to 8, wherein the electrolyte treatment unit is configured to accept the negolyte solution from the first tank or the posolyte solution from the second tank, perform an electrochemical redox reaction on the negolyte or posolyte solution, and return the treated negolyte or posolyte solution to the same tank it came from.

10. The system of any one of Claims 6 to 9, wherein the electrolyte treatment unit is also capable of performing an electrochemical reduction reaction on the negolyte solution from the first tank or the posolyte solution from the second tank.

11. The system of any one of Claims 1 to 10, further comprising a hydraulic connection between the first tank and the second tank, with a valve located on the hydraulic connection.

12. The system of any one of Claims 1 to 11, wherein the CN detection sensor comprises a pH sensor positioned in the second tank, a level sensor positioned in the second tank, a UV/Vis detector positioned within a sample loop in fluid connection with the posolyte solution, or any combination thereof.

13. The system of any one of Claims 1 to 12, wherein the CN detection sensor further comprises an HCN sensor positioned in the headspace of the second tank above the posolyte solution.

14. The system of any one of Claims 1 to 13, wherein the CN detection sensor consists of a pH sensor in the second tank, and a level sensor in the second tank.

15. The system of any one of Claims 1 to 14, wherein the CN detection sensor comprises a sensor configured for the direct detection of free cyanide or of hydrogen cyanide, a pH sensor, a temperature sensor, a colorimetric sensor, a spectroscopic sensors, an electrochemical sensor, an open circuit voltage sensor, an electrical conductivity sensor, a hydraulic pressure sensor, a liquid level sensor, a liquid density sensor, a liquid viscosity sensor, a sensor configured for the direct detection of carbon dioxide, a sensor configured for the direct detection of sulfur dioxide, or any combination thereof.
